# FASCICULE DE BREVET EUROPEEN

(11) **EP 2 303 562 B1**
(45) Date de publication et mention de la délivrance du brevet: **16.01.2013**
(21) Numéro de dépôt: 09768898.0
(22) Date de dépôt: 03.06.2009
(51) Int. Cl.: B29C 73/16, B29C 73/20, B60C 1/00, B60C 5/14, B60C 19/12, C09K 3/10, C08L 53/02, B32B 25/14

(54) **STRATIFIE ETANCHE A L'AIR ET ANTICREVAISON POUR OBJET PNEUMATIQUE**
DURCHSTOSSFESTES, LUFTUNDURCHLÄSSIGES LAMINAT FÜR EINEN AUFBLASBAREN ARTIKEL
PUNCTURE-RESISTANT AIR-IMPERMEABLE LAMINATE FOR AN INFLATABLE ARTICLE

(30) Priorité: 24.06.2008 FR 0854155
(43) Date de publication de la demande: 06.04.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CUSTODERO, Emmanuel, F-63400 Chamalières (FR); LESAGE, Pierre, F-63000 Clermont-Ferrand (FR); ABAD, Vincent, F-63400 Chamalières (FR)
(74) Mandataire: Ribière, Joel
(86) Numéro de dépôt international: PCT/EP2009/003948
(87) Numéro de publication internationale: WO 2009/156049

(56) Documents cités:
- EP-A- 1 060 870
- EP-A- 1 714 802
- EP-B- 1 090 069
- FR-A- 2 886 581

## Description

La présente invention est relative aux couches étanches aux gaz de gonflage ainsi qu'aux couches anti-crevaison auto-obturantes ("*self-sealing*"), destinées à obturer d'éventuels trous dus à des perforations en service, ainsi qu'à l'utilisation de telles couches dans des objets pneumatiques. Le document FR-A-2 886 581 présente un pneumatique comportant de telles couches étanches.

Elle est plus particulièrement relative aux stratifiés multicouches remplissant les deux fonctions ci-dessus, étanchéité et anti-crevaison, destinés en particulier à des bandages pneumatiques ou à des chambres à air.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" ("*inner liner*") étanche est essentiellement remplie aujourd'hui par des compositions à base d'élastomère ou caoutchouc butyl, reconnues depuis fort longtemps pour leurs excellentes propriétés d'étanchéité.

Par ailleurs, depuis quelques années, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont été imaginées mais n'ont pu se développer dans les bandages pneumatiques pour véhicules notamment par manque de stabilité dans le temps ou d'efficacité dans des conditions extrêmes de température d'utilisation.

Pour contribuer à maintenir une bonne efficacité à haute température, le document US-A-4,113,799 (ou FR-A-2 318 042) a proposé comme couche auto-obturante une composition comportant une combinaison de caoutchoucs butyls de haute et basse masses moléculaires réticulés partiellement, en présence éventuellement d'une faible part d'élastomère thermoplastique styrénique. Pour une bonne efficacité d'obturation, ladite composition comporte de 55 à 70% en poids d'un agent tackifiant.

Le document US-A-4 228 839 a proposé comme couche auto-obturante pour pneumatique un mélange de caoutchouc contenant une première matière polymère qui se dégrade par irradiation, telle que du polyisobutylène, et une seconde matière polymère qui se réticule par irradiation, préférentiellement un caoutchouc butyl.

Le document US-A-4 426 468 a lui aussi proposé une composition auto-obturante pour pneumatique à base de caoutchouc butyl à très haute masse moléculaire, réticulé.

Un inconvénient connu des caoutchoucs butyls est qu'ils présentent des pertes hystérétiques importantes, qui plus est sur un spectre large de température, inconvénient qui se répercute sur les couches ou compositions elles-mêmes, qu'elles soient du type étanches aux gaz comme du type auto-obturantes, avec une forte augmentation de l'hystérèse et une pénalisation notable de la résistance au roulement des bandages pneumatiques utilisant de telles compositions.

Diminuer l'hystérèse des stratifiés multi-couches étanches aux gaz et auto-obturants, et donc in fine la consommation de carburant des véhicules automobiles, est un objectif général auquel se heurte la technologie actuelle.

D'autre part, les Demanderesses ont constaté que les compositions auto-obturantes à base de caoutchouc butyl peuvent présenter une efficacité insuffisante après l'expulsion ou le retrait différé d'un objet perforant resté en place pendant une longue période dans la structure du bandage pneumatique.

Le document EP-B1-1 090 069 a certes proposé quant à lui des compositions auto-obturantes dépourvues de caoutchouc butyl, dont la formulation spécifique comprend pour 100 parties en masse d'un élastomère thermoplastique à base de styrène, 80 à 140 parties d'un plastifiant liquide, 110 à 190 parties d'une résine tackifiante et de 2 à 20 parties d'un additif.

Une quantité importante de résine tackifiante, outre le coût industriel plus élevé qu'elle induit pour les pneumatiques, peut elle aussi pénaliser la résistance au roulement des pneumatiques en raison d'un risque de rigidification excessive de la composition auto-obturante.

Or, les Demanderesses ont découvert lors de leurs recherches un stratifié multicouches étanche à l'air et anti-crevaison qui permet de pallier les inconvénients précités, avec une couche auto-obturante ne nécessitant ni caoutchouc butyl ni l'emploi de résines tackifiantes, et qui présente dans un objet pneumatique une performance anti-crevaison améliorée par rapport aux compositions auto-obturantes de l'art antérieur. Comparativement aux compositions auto-obturantes usuelles, elle améliore notablement la vitesse d'obturation d'un trou lors du retrait, notamment différé, d'un objet perforant.

Ainsi, selon un premier objet, la présente invention concerne un stratifié multicouches étanche aux gaz de gonflage et anti-crevaison, utilisable dans un objet pneumatique, caractérisé en ce qu'il comporte au moins trois couches (pce signifiant parties en poids pour cent parties d'élastomère, dans chaque composition considérée) :
o à titre de couche étanche à l'air, une première composition élastomère comportant au moins 50 pce d'un élastomère diénique ;
o à titre de couche anti-crevaison, une deuxième composition élastomère auto-obturante comportant au moins 50 pce d'un élastomère thermoplastique styrénique saturé et plus de 200 pce d'une huile d'extension ;
o à titre d'interphase adhésive entre ces deux couches, une troisième composition comportant au moins 30 pce d'un élastomère thermoplastique styrénique insaturé.

L'invention concerne particulièrement l'utilisation d'un tel stratifié dans un objet pneumatique tel qu'un bandage pneumatique, particulièrement lorsque ladite composition ou ledit stratifié est disposé(e) sur la paroi interne dudit objet ou bandage pneumatique.

La présente invention concerne particulièrement l'utilisation du stratifié ci-dessus dans des bandages pneumatiques destinés à équiper des véhicules à moteur de type tourisme, SUV ("*Sport Utility Vehicles*"), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout objet pneumatique, en particulier un bandage pneumatique, comportant un stratifié selon l'invention.

L'invention ainsi que ses avantages seront aisément compris à la lumière de la description et des exemples de réalisation qui suivent, ainsi que de la figure unique relative à ces exemples qui schématise en coupe radiale, un bandage pneumatique à armature de carcasse radiale utilisant une composition auto-obturante conformément à la présente invention.

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le stratifié multicouches de l'invention a donc pour caractéristique essentielle de comporter au moins trois couches (pce signifiant parties en poids pour cent parties d'élastomère(s) présent(s) dans chaque couche ou composition considérée) :
o à titre de première couche étanche à l'air, une première composition élastomère comportant au moins 50 pce d'un élastomère diénique ;
o à titre de deuxième couche anti-crevaison, une deuxième composition élastomère auto-obturante comportant au moins 50 pce d'un élastomère thermoplastique styrénique ("TPS") saturé et plus de 200 pce d'une huile d'extension ;
o à titre d'interphase ou troisième couche adhésive, disposée entre les deux couches ci-dessus, une troisième composition comportant au moins 30 pce d'un élastomère TPS insaturé.

Par élastomère ou caoutchouc "diénique", on rappelle que doit être entendu, de manière connue, un élastomère issu au moins en partie (i.e. un homopolymère ou un copolymère) de monomères diènes (monomères porteurs de deux doubles liaisons carbone-carbone, conjuguées ou non) ; cet élastomère est par définition du type insaturé puisqu'il contient encore, après polymérisation, au moins une double liaison carbone-carbone par motif diène de départ.

Les élastomères thermoplastiques styréniques (en abrégé "TPS") sont quant à eux des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Dans la présente demande, on entend par définition et de manière connue :
- par élastomère TPS saturé, un élastomère TPS qui ne comporte aucune insaturation éthylénique (i.e., aucune double liaison carbone-carbone) ;
- par élastomère TPS insaturé, un élastomère TPS qui est pourvu d'insaturations éthyléniques, c'est-à-dire qui comporte des doubles liaisons carbone-carbone (conjuguées ou non).

### 1-1. COUCHE ETANCHE A L'AIR

A titre de première composition (couche étanche à l'air), est utilisée tout type de composition élastomère à base d'un élastomère diénique susceptible de remplir la fonction de film étanche à l'air (ou plus généralement aux gaz).

De préférence, cette couche étanche à l'air a une épaisseur supérieure à 0,05 mm, plus préférentiellement comprise entre 0,05 et 6 mm (par exemple de 0,1 à 2 mm).

A titre préférentiel, l'élastomère diénique (élastomère majoritaire, par définition, dans la composition étanche à l'air) est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères isoprène- isobutylène (IIR), les copolymères d'isoprène-butadiène-styrène (SBIR) et les mélanges de tels copolymères.

En d'autres termes, l'élastomère diénique de la première composition est choisi préférentiellement dans le groupe constitué par les élastomères BR, IR, NR, SBR, BIR, SIR, IIR, SBIR et les mélanges de tels copolymères.

Selon un mode de réalisation particulièrement préférentiel, la première composition comporte un caoutchouc butyl. Par caoutchouc butyl, doit être entendu de manière connue un copolymère d'isobutylène et d'isoprène (en abrégé IIR), ainsi que les versions halogénées, de préférence chlorées ou bromées, de ce type de copolymère.

De préférence, le caoutchouc butyl est un caoutchouc butyl halogéné ou un coupage de butyls halogéné et non halogéné. Le caoutchouc butyl peut être utilisé seul ou en association avec un ou plusieurs autre(s) élastomère(s), notamment élastomères diénique(s) tels que par exemple du caoutchouc naturel ou un polyisoprène synthétique. De préférence, le taux de caoutchouc butyl, dans la première composition, est supérieur à 70 pce, plus préférentiellement compris dans un domaine de 80 à 100 pce.

### 1-2. COUCHE ANTI-CREVAISON

A titre de deuxième couche anti-crevaison, est utilisée une deuxième composition, auto-obturante, ayant pour caractéristique essentielle de comporter au moins 50 pce (c'est-à-dire de 50 pce à 100 pce) d'un élastomère TPS saturé étendu avec plus de 200 pce d'huile.

De préférence, cette couche anti-crevaison a une épaisseur supérieure à 0,3 mm, plus préférentiellement comprise entre 0,5 et 10 mm (par exemple entre 1 et 5 mm).

### I-2-A. Elastomère TPS saturé

De préférence, l'élastomère TPS saturé (élastomère majoritaire, par définition, dans la composition auto-obturante) est choisi dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS et les mélanges de ces copolymères.

Selon un mode de réalisation préférentiel de l'invention, les taux de styrène, dans chaque élastomère TPS précédemment décrit (saturé et insaturé) est compris entre 5 et 50%. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

Selon un autre mode de réalisation préférentiel de l'invention, la Tg (mesurée par DSC (*Differential Scanning Calorimetry*) selon ASTM D3418, 1999) de l'élastomère TPS saturé soit inférieure à -20°C, plus préférentiellement inférieure à -40°C. Une valeur de Tg supérieure à ces minima, impliquant une Tg plus élevée de la composition elle-même, peut diminuer les performances de la composition auto-obturante lors d'une utilisation à très basse température ; pour une telle utilisation, la Tg de l'élastomère TPS saturé est plus préférentiellement encore inférieure à -50°C.

La masse moléculaire moyenne en nombre (notée Mn) de l'élastomère TPS saturé est préférentiellement comprise entre 50 000 et 500 000 g/mol, plus préférentiellement comprise entre 75 000 et 450 000. En dessous des minima indiqués, la cohésion entre les chaînes d'élastomère TPS, en raison de sa dilution (quantité d'agent d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la composition, aux taux d'huile d'extension préconisés. Ainsi, on a constaté qu'une valeur comprise dans un domaine de 250 000 à 400 000 était particulièrement bien adaptée, notamment à une utilisation de la composition auto-obturante dans un bandage pneumatique.

La masse moléculaire Mn est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Des élastomères TPS saturés tels que par exemple SEPS ou SEBS, étendus notamment avec de forts taux d'huiles, sont bien connus et disponibles commercialement. A titre d'exemples de TPS saturés commerciaux sous forme étendue, on peut citer les produits commercialisés par la société Vita Thermoplastic Elastomers ou VTC ("VTC TPE group") sous la dénomination "Dryflex" (e.g. "Dryflex 967100") ou "Mediprene" (e.g. "Mediprene 500 000M"), ceux vendus par Multibase sous dénomination "Multiflex" (e.g. "Multiflex G00"). Ces produits, développés notamment pour des applications médicalés, pharmaceutiques ou cosmétiques, peuvent être mis en oeuvre de façon classique pour des TPE, par extrusion ou moulage, par exemple à partir d'une matière première disponible sous la forme de billes ou de granulés. Bien entendu, les élastomères TPS saturés sont également disponibles sous forme non étendue. A titre d'exemples, on peut citer les élastomères de type SEBS ou SEPS commercialisés par la société Kraton sous la dénomination "Kraton G" (e.g. produits G 1650, G1651, G 1654, G 1730) ou la société Kuraray sous la dénomination "Septon" (e.g. S2005, S2006, S8004, S8006).

Selon un mode de réalisation préférentiel de l'invention, le taux d'élastomère TPS saturé est supérieur à 70 pce, plus préférentiellement compris dans un domaine de 80 à 100 pce. L'élastomère TPS saturé précédemment décrit peut constituer avantageusement la totalité de la matrice élastomère de la composition auto-obturante (soit 100 pce).

### I-2-B. Huile d'extension

Le deuxième constituant essentiel de la composition auto-obturante est une huile d'extension (ou huile plastifiante) utilisée à un taux très élevé, supérieur à 200 pce - soit plus de 200 parties en poids pour cent parties d'élastomère total (i.e., élastomère TPS saturé plus élastomère(s) complémentaire(s) le cas échéant) - , de préférence supérieur à 250 pce.

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension est choisie dans le groupe constitué par les polybutènes, les huiles paraffiniques et les mélanges de ces huiles. On utilise tout particulièrement une huile polyisobutène, en particulier polyisobutylène ("PIB").

A titre d'exemples, des huiles polyisobutylène sont commercialisées notamment par la société Univar sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par Exxon sous la dénomination "Telura 618" ou par Repsol sous la dénomination "Extensol 51 ".

La masse moléculaire moyenne en nombre (Mn) de l'huile d'extension est préférentiellement comprise entre 200 et 30 000 g/mol, plus préférentiellement encore comprise entre 300 et 10 000 g/mol. Pour des masses Mn trop basses, il existe un risque de migration de l'huile à l'extérieur de la composition auto-obturante, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la composition auto-obturante, notamment de l'objet pneumatique dans lequel elle est destinée à être utilisée.

On préfère que le taux d'huile d'extension soit compris entre 200 et 900 pce, plus préférentiellement entre 250 et 850 pce. En dessous du minimum indiqué, la composition auto-obturante risque de présenter une rigidité trop forte pour certaines applications tandis qu'au-delà du maximum préconisé, on s'expose à un risque de cohésion insuffisante de la composition. Pour cette raison, le taux d'huile d'extension est plus préférentiellement compris entre 300 et 800 pce, notamment pour une utilisation de la composition auto-obturante dans un bandage pneumatique.

### I-3. INTERPHASE ADHESIVE

A titre de troisième couche ou interphase adhésive, disposée entre les deux couches précédentes, est utilisée une composition élastomère dont la caractéristique essentielle est de comporter au moins 30 pce (c'est-à-dire de 30 pce à 100 pce), de préférence au moins 50 pce (c'est-à-dire de 50 pce à 100 pce) d'un élastomère TPS du type insaturé.

De préférence, l'élastomère TPS insaturé est choisi dans le groupe constitué par les copolymères blocs styrène/ butadiène (SB), styrène/ isoprène (SI), styrène/ butadiène/butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/butadiène/ isoprène/ styrène (SBIS) et les mélanges de ces copolymères. Plus préférentiellement, cet élastomère TPS insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/butadiène/ isoprène/ styrène (SBIS) et les mélanges de ces copolymères.

Selon un autre mode de réalisation préférentiel de l'invention, pour les mêmes raisons que celles indiquées précédemment pour l'élastomère TPS saturé, la teneur en styrène de l'élastomère TPS insaturé est comprise entre 5 et 50%, plus préférentiellement comprise entre 10 et 40%, en particulier entre 15 et 35%.

Selon un autre mode de réalisation préférentiel de l'invention, pour les mêmes raisons que celles indiquées précédemment pour l'élastomère TPS saturé, la masse moléculaire moyenne en nombre (Mn) de l'élastomère TPS saturé est comprise entre 50 000 et 500 000 g/mol, plus préférentiellement comprise entre 75 000 et 450 000 g/mol.

Selon un autre mode de réalisation particulièrement préférentiel de l'invention, le taux d'élastomère TPS insaturé est supérieur à 70 pce, plus préférentiellement compris dans un domaine de 80 à 100 pce. L'élastomère TPS insaturé précédemment décrit peut constituer avantageusement la totalité de la matrice élastomère de la composition (soit 100 pce).

Des élastomères TPS insaturés tels que par exemple SBS, SIS ou SBBS, sont également bien connus et disponibles commercialement, par exemple auprès de la société Kraton sous la dénomination "Kraton D" (e.g., produits D1161, D1118, D1116, D1163 pour des exemples d'élastomères SIS et SBS), auprès de la société Dynasol sous la dénomination "Calprene" (e.g., produits C405, C411, C412 pour des exemples d'élastomères SBS) ou encore auprès de la société Asahi sous la dénomination "Tuftec" (e.g., produit P1500 pour un exemple d'élastomère SBBS).

Outre l'élastomère TPS insaturé ci-dessus décrit, la troisième composition adhésive peut comporter ou non, selon les applications particulières mises en oeuvre, un agent plastifiant liquide (à température ambiante, soit 23°C) dont le rôle est de plastifier l'élastomère TPS insaturé et donner ainsi plus de souplesse à l'interphase adhésive.

Si un tel agent plastifiant liquide est utilisé, il est présent à un taux préférentiellement compris entre 0 et 100 pce, plus préférentiellement entre 5 et 50 pce, en particulier dans un domaine de 10 à 40 pce, domaines de valeurs qui représentent un excellent compromis entre facilité de mise en oeuvre de la couche adhésive d'une part, efficacité d'adhésion d'autre part de cette dernière aux deux autres couches du stratifié.

Selon un mode de réalisation particulier de l'invention, cet agent plastifiant liquide peut consister en une huile d'extension telle que décrite au paragraphe qui précède, notamment choisie dans le groupe constitué par les huiles polybutène telles que polyisobutylène, les huiles paraffiniques et les mélanges de ces huiles.

Selon un autre mode de réalisation particulier de l'invention, cet agent plastifiant liquide peut consister en un élastomère liquide, c'est-à-dire présentant une faible masse moléculaire, typiquement inférieure à 50 000, préférentiellement inférieure à 30 000 g/mol. Il peut s'agir en particulier d'une élastomère diénique liquide tel que IR, SBR, BR.

L'épaisseur de l'interphase adhésive, préférentiellement supérieure à 0,01 mm, peut varier dans une large mesure, par exemple entre 0,01 et 0,5 mm, en fonction notamment du mode de dépôt de ladite couche adhésive sur l'une et/ou l'autre des deux couches précédemment décrites. Un dépôt par pulvérisation permettra par exemple d'atteindre des épaisseurs très fines pouvant même être inférieures à 10 µm. Avantageusement, selon un autre mode de réalisation particulier de l'invention, la couche adhésive est coextrudée avec la couche anti-crevaison.

### I-4. ADDITIFS DIVERS

La stratifié de l'invention peut comporter les divers additifs, notamment ceux usuellement présents dans les couches étanches à l'air ou les couches auto-obturantes connues de l'homme du métier, ces additifs étant typiquement présents en faible quantité (préférentiellement à des taux inférieurs à 20 pce, plus préférentiellement inférieurs à 10 pce).

On citera par exemple des charges renforçantes telles que du noir de carbone ou de la silice, des charges non renforçantes ou inertes, des agents colorants avantageusement utilisables pour la coloration des compositions, des charges lamellaires améliorant encore l'étanchéité (e.g. phyllosilicates tels que kaolin, talc, mica, graphite, argiles ou argiles modifiées ("*organo clays*"), des agents de protection tels que antioxydants ou antiozonants, anti-UV, divers agents de mise en oeuvre ou autres stabilisants, ou encore des promoteurs aptes à favoriser l'adhésion du stratifié au reste de la structure de l'objet pneumatique.

Bien que la composition auto-obturante, grâce à sa formulation spécifique, ne nécessite pas l'emploi de résine hydrocarbonée plastifiante ou tackifiante, l'invention s'applique également aux cas où une telle résine serait utilisée. De manière connue de l'homme du métier, la dénomination "résine" est réservée, par définition, à un composé qui est d'une part solide à température ambiante (23°C) (par opposition à un composé plastifiant liquide tel qu'une huile), d'autre part compatible (c'est-à-dire miscible au taux utilisé) avec la composition d'élastomère à laquelle il est destiné, de manière à agir comme un véritable agent diluant.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Outre les élastomères précédemment décrits (premier élastomère diénique, second élastomère TPS saturé, troisième élastomère TPS insaturé et le cas échéant autres élastomères complémentaires éventuels), les trois couches précédemment décrites pourraient également comporter, toujours selon une fraction pondérale minoritaire par rapport à l'élastomère principal, des polymères autres que des élastomères, tels que par exemple des polymères thermoplastiques.

### I-5. UTILISATION DU STRATIFIE DANS UN BANDAGE PNEUMATIQUE

Le stratifié de l'invention précédemment décrit est un composé solide (à 23°C) et élastique, qui se caractérise notamment, grâce à sa formulation spécifique, par une très haute souplesse et très haute déformabilité.

Il peut être utilisé dans tout type d'objet "pneumatique", c'est-à-dire, par définition, tout objet qui prend sa forme utilisable quand on le gonfle d'air.

A titre d'exemples de tels objets pneumatiques, on peut citer les bateaux pneumatiques, les ballons ou balles utilisées pour le jeu ou le sport.

Il est particulièrement bien adapté à une utilisation dans un objet pneumatique, produit fini ou semi-fini, en caoutchouc, tout particulièrement dans un bandage pneumatique pour véhicule automobile tel qu'un véhicule de type deux roues, tourisme ou industriel, ou non automobile tel que vélo.

Un tel stratifié est préférentiellement disposé sur la paroi interne de l'objet pneumatique, le recouvrant totalement ou au moins en partie, mais il peut être également intégré complètement à sa structure interne.

On comprendra aisément que, selon les domaines d'application spécifiques, les dimensions et les pressions en jeu, le mode de mise en oeuvre de l'invention peut varier, la première couche étanche à l'air comme la seconde couche auto-obturante comportant en fait plusieurs gammes préférentielles d'épaisseur. Ainsi, par exemple, pour des bandages pneumatiques de type tourisme, elles peuvent avoir une épaisseur d'au moins 0,4 mm, préférentiellement comprise entre 0,6 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement aux stratifiés étanches à l'air et auto-obturants de l'art antérieur, le stratifié selon l'invention a l'avantage de présenter, dans une très large gamme de température d'utilisation des bandages pneumatiques, pratiquement aucune pénalisation en termes de résistance au roulement par rapport à un bandage pneumatique ne comportant pas de couche auto-obturante. En outre, comparativement aux compositions auto-obturantes usuelles, la composition auto-obturante du stratifié de l'invention améliore très notablement la vitesse d'obturation du trou, en particulier lors du retrait différé d'un objet perforant.

D'autre part, les compositions auto-obturantes usuelles présentent une aptitude importante au fluage. Lors du roulage des bandages pneumatiques, elles sont souvent chassées de la partie flanc de ces bandages sous l'effet des forces centrifuges et s'accumulent sous leur partie sommet. Ce n'est pas le cas pour les compositions préconisées par la présente invention qui peuvent être disposées dans toute la partie intérieure des bandages pneumatiques.

Les trois couches du stratifié ci-dessus peuvent être assemblées par tout moyen approprié, par exemple par une simple opération de cuisson, de préférence sous pression (par exemple une dizaine de minutes à 150°C sous 16 bars).

### II. EXEMPLE DE REALISATION DE L'INVENTION

Le stratifié multicouches de l'invention est avantageusement utilisable dans les bandages pneumatiques de tous types de véhicules, en particulier dans les bandages pour véhicules tourisme susceptibles de rouler à très haute vitesse ou les bandages pour véhicules industriels tels que Poids-lourd susceptibles de rouler et fonctionner sous des conditions de températures internes particulièrement élevées.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). -

Le bandage pneumatique 1 est caractérisé en ce que sa paroi interne comporte un stratifié multi-couches (10) comportant au moins deux couches (10a, 10b), auto-obturant grâce à sa première couche (10a) et étanche à l'air grâce à sa seconde couche (lOb).

Conformément à un mode de réalisation préférentiel de l'invention, les deux couches (10a, 10b) couvrent substantiellement toute la paroi interne du bandage pneumatique, se prolongeant d'un flanc à l'autre, au moins jusqu'au niveau du crochet de jante lorsque le bandage pneumatique est en position montée. Selon d'autres modes de réalisation possibles, la couche 10a pourrait toutefois recouvrir uniquement une partie de la zone étanche à l'air (couche 10b), par exemple seulement la zone sommet du bandage pneumatique ou s'étendre au moins de la zone sommet jusqu'aux épaules ou jusqu'à mi-flanc (équateur) dudit bandage.

Selon un autre mode de réalisation préférentiel, le stratifié est disposé de telle manière que la première couche (10a) auto-obturante soit radialement la plus externe dans le bandage pneumatique, par rapport à l'autre couche (10b), comme schématisé sur la figure annexée. En d'autres termes, la couche (10a) auto-obturante recouvre la couche (10b) étanche à l'air du côté de la cavité interne 11 du bandage pneumatique 1. Un autre mode de réalisation possible est celui où cette couche (10a) est radialement la plus interne, disposée alors entre la couche étanche (10b) et le reste de la structure du bandage 1.

Dans cet exemple, la couche 10b (d'épaisseur 0,7 à 0,8 mm) est à base de caoutchouc butyl, présente une formulation conventionnelle pour une "gomme intérieure" ("*inner liner*") qui définit usuellement, dans un bandage pneumatique conventionnel, la face radialement interne dudit bandage destinée à protéger l'armature de carcasse de la diffusion d'air provenant de l'espace intérieur au bandage. Cette couche 10b étanche à l'air permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 10a est quant à elle constituée d'une composition auto-obturante comportant les deux constituants essentiels que sont un élastomère SEBS ("G1654" de la société Kraton ; (avec un taux de styrène d'environ 30%, une Tg proche de -60°C et une valeur Mn de l'ordre de 150 000 g/mol), et une huile d'extension polyisobutylène ("Dynapak 190" de la société Univar - Mn de l'ordre de 1000 g/mol) à un taux pondéral d'environ 550 pce.

La composition auto-obturante ci-dessus a été préparée comme suit. Le mélange des deux constituants (SEBS et huile) a été réalisé de manière conventionnelle, à l'aide d'une extrudeuse bi-vis (L/D = 40), à une température typiquement supérieure à la température de fusion de la composition (environ 190°C). L'extrudeuse utilisée comportait une alimentation (trémie) pour le SEBS et une pompe d'injection liquide sous pression pour l'huile d'extension polyisobutylène ; elle était pourvue d'une filière permettant d'extruder le produit aux dimensions souhaitées.

La couche 10a, disposée donc entre la couche 10b et la cavité 11 du pneumatique, permet de procurer au pneumatique une protection efficace contre les pertes de pression dues aux perforations accidentelles, en permettant l'obturation automatique de ces perforations.

Si un corps étranger tel qu'un clou traverse la structure de l'objet pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

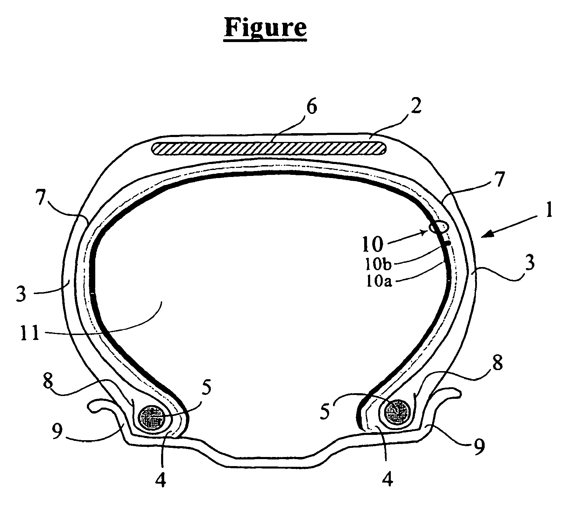

Entre les couches 10a et 10b est disposée une interphase adhésive non représentée sur la figure 1, pour simplification, en raison de son épaisseur très fine (égale à 0,25 mm). Cette troisième couche, dépourvue d'agent plastifiant liquide, est constituée d'élastomère SIS (Kraton D1161), elle a été obtenue par extrusion comme la couche 10a précédente.

Le pneumatique pourvu de son stratifié étanche à l'air et anti-crevaison (10) tel que décrit ci-dessus peut être réalisé avantageusement avant vulcanisation (ou cuisson). Le stratifié est simplement appliqué de façon conventionnelle à l'endroit souhaité. La vulcanisation est ensuite effectuée classiquement. Les élastomères diéniques et TPS supportent bien les contraintes liées à l'étape de vulcanisation. Une variante de fabrication avantageuse, pour l'homme du métier des bandages pneumatiques, consistera par exemple au cours d'une première étape, à déposer à plat, ensemble ou séparément, la couche anti-crevaison et l'interphase adhésive directement sur un tambour de confection, sous la forme d'une structure finale bicouche d'épaisseur adaptée (par exemple 2 à 6 mm), avant de recouvrir cette dernière avec la couche étanche à l'air puis le reste de la structure du bandage pneumatique, selon des techniques de fabrication bien connues de l'homme du métier.

## Revendications

1. Stratifié élastomère multicouches étanche à l'air et anti-crevaison, utilisable notamment dans un objet pneumatique, comportant au moins trois couches, pce signifiant parties en poids pour cent parties d'élastomère dans chaque composition considérée, **caractérisée par** :
o à titre de première couche étanche à l'air, une première composition élastomère comportant au moins 50 pce d'un élastomère diénique ;
o à titre de deuxième couche anti-crevaison, une deuxième composition élastomère auto-obturante comportant au moins 50 pce d'un élastomère thermoplastique styrénique, en abrégé "TPS" saturé et plus de 200 pce d'une huile d'extension.
o à titre d'interphase ou troisième couche adhésive, disposée entre les deux couches ci-dessus, une troisième composition comportant au moins 30 pce d'un élastomère TPS insaturé.

2. Stratifié selon la revendication 1, dans lequel l'élastomère diénique de la première composition est choisi dans le groupe constitué par les polybutadiènes, les polyisoprènes de synthèse, le caoutchouc naturel, les copolymères de butadiène, les copolymères d'isoprène et les mélanges de ces élastomères.

3. Stratifié selon la revendication 2, dans lequel l'élastomère diénique de la première composition est un caoutchouc butyl.

4. Stratifié selon l'une quelconque des revendications 1 à 3, dans lequel l'élastomère TPS saturé de la deuxième composition est choisi dans le groupe constitué par les copolymères styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

5. Stratifié selon la revendication 4, dans lequel l'élastomère TPS saturé est choisi dans le groupe constitué par les copolymères SEBS, les copolymères SEPS et les mélanges de ces copolymères.

6. Stratifié selon l'une quelconque des revendications 1 à 5, dans lequel l'élastomère TPS insaturé de la troisième composition est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

7. Stratifié selon l'une quelconque des revendications 1 à 6, dans lequel le taux d'élastomère TPS saturé de la deuxième composition est supérieur à 70 pce, de préférence compris dans un domaine de 80 à 100 pce.

8. Stratifié selon l'une quelconque des revendications 1 à 7, dans lequel le taux d'élastomère TPS insaturé de la troisième composition est au moins égal à 50 pce, de préférence supérieur à 70 pce.

9. Stratifié selon l'une quelconque des revendications 1 à 8, dans lequel l'huile d'extension de la deuxième composition est choisie dans le groupe constitué par les huiles polyoléfiniques, les huiles paraffiniques, les huiles naphténiques, les huiles aromatiques, les huiles minérales, et les mélanges de ces huiles.

10. Stratifié selon la revendication 9, dans lequel l'huile d'extension de la deuxième composition est une huile polyisobutylène.

11. Stratifié selon l'une quelconque des revendications 1 à 10, dans lequel le taux d'huile d'extension de la deuxième composition est compris entre 200 et 900 pce.

12. Stratifié selon l'une quelconque des revendications 1 à 11, dans lequel la troisième composition comporte un agent plastifiant liquide, à un taux préférentiellement compris entre 0 et 100 pce.

13. Stratifié selon la revendication 12, dans lequel l'agent plastifiant liquide de la troisième composition est une huile telle que définie dans l'une quelconque des revendications 9 à 10.

14. Stratifié selon l'une quelconque des revendications 1 à 13, dans lequel l'agent plastifiant liquide de la troisième composition est un élastomère liquide.

15. Objet pneumatique comportant un stratifié étanche à l'air et anti-crevaison selon l'une quelconque des revendications 1 à 14.

## Claims

1. Airtight and puncture-resistant multilayer elastomer laminate that can be used in particular in an inflatable article, comprising at least three layers, phr signifying parts by weight per hundred parts of rubber (elastomer) in each composition considered, **characterized by**:
oas an airtight first layer, a first elastomer composition comprising at least 50 phr of a diene elastomer;
oas a puncture-resistant second layer, a self-sealing second elastomer composition comprising at least 50 phr of a saturated thermoplastic styrene, abbreviated to TPS, elastomer and more than 200 phr of an extender oil;
o as an adhesive interphase or third layer, positioned between the above two layers, a third composition comprising at least 30 phr of an unsaturated TPS elastomer.

2. Laminate according to Claim 1, in which the diene elastomer of the first composition is chosen from the group formed by polybutadienes, synthetic polyisoprenes, natural rubber, butadiene copolymers, isoprene copolymers and blends of these elastomers.

3. Laminate according to Claim 2, in which the diene elastomer of the first composition is a butyl rubber.

4. Laminate according to any one of Claims 1 to 3, in which the saturated TPS elastomer of the second composition is chosen from the group formed by styrene/ethylene/butylene (SEB), styrene/ethylene/propylene (SEP), styrene/ethylene/ethylene/propylene (SEEP), styrene/ethylene/butylene/styrene (SEBS), styrene/ethylene/propylene/styrene (SEPS) and styrene/ethylene/ethylene/propylene/styrene (SEEPS) copolymers, and blends of these copolymers.

5. Laminate according to Claim 4, in which the saturated TPS elastomer is chosen from the group formed by SEBS copolymers, SEPS copolymers and blends of these copolymers.

6. Laminate according to any one of Claims 1 to 5, in which the unsaturated TPS elastomer of the third composition is chosen from the group formed by styrene/butadiene (SB), styrene/isoprene (SI), styrene/butadiene/ butylene (SBB), styrene/butadiene/isoprene (SBI), styrene/butadiene/styrene (SBS), styrene/butadiene/butylene/styrene (SBBS), styrene/ isoprene/styrene (SIS) and styrene/butadiene/isoprene/styrene (SBIS) block copolymers and blends of these copolymers.

7. Laminate according to any one of Claims 1 to 6, in which the content of saturated TPS elastomer of the second composition is greater than 70 phr, preferably within a range of 80 to 100 phr.

8. Laminate according to any one of Claims 1 to 7, in which the content of unsaturated TPS elastomer of the third composition is at least equal to 50 phr, preferably greater than 70 phr.

9. Laminate according to any one of Claims 1 to 8, in which the extender oil of the second composition is chosen from the group formed by polyolefin oils, paraffinic oils, naphthenic oils, aromatic oils, mineral oils and mixtures of these oils.

10. Laminate according to Claim 9, in which the extender oil of the second composition is a polyisobutylene oil.

11. Laminate according to any one of Claims 1 to 10, in which the content of extender oil of the second composition is between 200 and 900 phr.

12. Laminate according to any one of Claims 1 to 11, in which the third composition comprises a liquid plasticizing agent, in a content preferentially between 0 and 100 phr.

13. Laminate according to Claim 12, in which the liquid plasticizing agent of the third composition is an oil as defined in any one of Claims 9 to 10.

14. Laminate according to any one of Claims 1 to 13, in which the liquid plasticizing agent of the third composition is a liquid elastomer.

15. Inflatable article comprising an airtight and puncture-resistant laminate according to any one of Claims 1 to 14.

## Patentansprüche

1. Luftdichtes mehrschichtiges Anti-Pannen-Laminat, das insbesondere in einem pneumatischen Objekt verwendet werden kann, mit mindestens drei Schichten, wobei phe Gewichtsteile pro hundert Teile Elastomer in jeder betrachteten Zusammensetzung bedeutet, **gekennzeichnet durch**:
o als erste luftdichte Schicht eine erste Elastomerzusammensetzung, die mindestens 50 phe eines Dienelastomers umfasst;
o als zweite Anti-Pannen-Schicht eine selbstversiegelnde zweite Elastomerschicht, die mindestens 50 phe eines gesättigten thermoplastischen Styrol-Elastomers, kurz TPS-Elastomers, und mehr als 200 phe eines Strecköls umfasst;
o als klebende Zwischenphase oder dritte Schicht, die zwischen den beiden obigen Schichten angeordnet ist, eine dritte Zusammensetzung, die mindestens 30 phe eines ungesättigten TPS-Elastomers umfasst.

2. Laminat nach Anspruch 1, wobei das Dienelastomer der ersten Zusammensetzung aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

3. Laminat nach Anspruch 2, wobei es sich bei dem Dienelastomer der ersten Zusammensetzung um Butylkautschuk handelt.

4. Laminat nach einem der Ansprüche 1 bis 3, wobei das gesättigte TPS-Elastomer der zweiten Zusammensetzung aus der Gruppe bestehend aus Styrol-Ethylen-Butylen-Copolymeren (SEB), Styrol-Ethylen-Propylen-Copolymeren (SEP), Styrol-Ethylen-Ethylen-Propylen-Copolymeren (SEEP), Styrol-Ethylen-Butylen-Styrol-Copolymeren (SEBS), Styrol-Ethylen-Propylen-Styrol-Copolymeren (SEPS), Styrol-Ethylen-Ethylen-Propylen-Styrol-Copolymeren (SEEPS) und Mischungen dieser Copolymere ausgewählt ist.

5. Laminat nach Anspruch 4, wobei das gesättigte TPS-Elastomer aus der Gruppe bestehend aus SEBS-Copolymeren, SEPS-Copolymeren und Mischungen dieser Copolymere ausgewählt ist.

6. Laminat nach einem der Ansprüche 1 bis 5, wobei das ungesättigte TPS-Elastomer der dritten Zusammensetzung aus der Gruppe bestehend aus StyrolButadien-Blockcopolymeren (SB), Styrol-Isopren-Blockcopolymeren (SI), Styrol-Butadien-Butylen-Blockcopolymeren (SBB), Styrol-Butadien-Isopren-Blockcopolymeren (SBI), Styrol-Butadien-Styrol-Blockcopolymeren (SBS), Styrol-Butadien-Butylen-Styrol-Blockcopolymeren (SBBS), Styrol-Isopren-Styrol-Blockcopolymeren (SIS), Styrol-Butadien-Isopren-Styrol-Blockcopolymeren (SBIS) und Mischungen dieser Copolymere ausgewählt ist.

7. Laminat nach einem der Ansprüche 1 bis 6, wobei der Gehalt der zweiten Zusammensetzung an gesättigtem TPS-Elastomer mehr als 70 phe beträgt und vorzugsweise in einem Bereich von 80 bis 100 phe liegt.

8. Laminat nach einem der Ansprüche 1 bis 7, wobei der Gehalt der dritten Zusammensetzung an ungesättigtem TPS-Elastomer mindestens 50 phe und vorzugsweise mehr als 70 phe beträgt.

9. Laminat nach einem der Ansprüche 1 bis 8, wobei das Strecköl der zweiten Zusammensetzung aus der Gruppe bestehend aus Polyolefinölen, Paraffinölen, naphthenischen Ölen, aromatischen Ölen, Mineralölen und Mischungen dieser Öle ausgewählt ist.

10. Laminat nach Anspruch 9, wobei es sich bei dem Strecköl der zweiten Zusammensetzung um ein Polyisobutylenöl handelt.

11. Laminat nach einem der Ansprüche 1 bis 10, wobei der Streckölgehalt der zweiten Zusammensetzung zwischen 200 und 900 phe liegt.

12. Laminat nach einem der Ansprüche 1 bis 11, wobei die dritte Zusammensetzung einen flüssigen Weichmacher in einer vorzugsweise zwischen 0 und 100 phe liegenden Menge umfasst.

13. Laminat nach Anspruch 12, wobei es sich bei dem flüssigen Weichmacher der dritten Zusammensetzung um ein Öl gemäß einem der Ansprüche 9 bis 10 handelt.

14. Laminat nach einem der Ansprüche 1 bis 13, wobei es sich bei dem flüssigen Weichmacher der dritten Zusammensetzung um ein flüssiges Elastomer handelt.

15. Pneumatisches Objekt, umfassend ein luftdichtes Anti-Pannen-Laminat nach einem der Ansprüche 1 bis 14.
